# EUROPÄISCHE PATENTSCHRIFT

(11) **EP 3 947 064 B1**
(45) Veröffentlichungstag und Bekanntmachung des Hinweises auf die Patenterteilung: **10.01.2024**
(21) Anmeldenummer: 20717581.1
(22) Anmeldetag: 30.03.2020
(51) Int. Cl.: B60T 1/10, B60W 30/18

(54) **VERFAHREN ZUM VERZÖGERN EINES KRAFTFAHRZEUGS BEI EINER NOTBREMSUNG MIT EINEM ELEKTROMOTOR EINES ELEKTROANTRIEBS DES KRAFTFAHRZEUGS UND EINEM BREMSMOMENT EINER BETRIEBSBREMSANLAGE DES KRAFTFAHRZEUGS, SOWIE KRAFTFAHRZEUG**
METHOD FOR DECELERATING A MOTOR VEHICLE DURING EMERGENCY BRAKING WITH AN ELECTRIC MOTOR OF AN ELECTRIC DRIVE OF THE MOTOR VEHICLE AND A BRAKING TORQUE OF A SERVICE BRAKE SYSTEM OF THE MOTOR VEHICLE, AND MOTOR VEHICLE
PROCÉDÉ DE RALENTISSEMENT D'UN VÉHICULE À MOTEUR LORS D'UN FREINAGE D'URGENCE AVEC UN MOTEUR ÉLECTRIQUE D'UN ENTRAÎNEMENT ÉLECTRIQUE DU VÉHICULE À MOTEUR ET AVEC UN COUPLE DE FREINAGE D'UNE INSTALLATION DE FREINAGE DE SERVICE DU VÉHICULE À MOTEUR, AINSI QUE VÉHICULE À MOTEUR

(30) Priorität: 02.04.2019 DE 102019204708
(43) Veröffentlichungstag der Anmeldung: 09.02.2022
(73) Patentinhaber: VOLKSWAGEN AKTIENGESELLSCHAFT, 38440 Wolfsburg (DE)
(72) Erfinder: WITTE, Bastian, 38179 Groß Schwülper (DE)
(86) Internationale Anmeldenummer: PCT/EP2020/058950
(87) Internationale Veröffentlichungsnummer: WO 2020/201212

(56) Entgegenhaltungen:
- EP-A1- 2 213 539
- EP-A1- 2 463 165
- WO-A1-2016/146277
- DE-A1-102009 039 347
- DE-A1-102014 218 068
- US-A1- 2012 031 692
- US-A1- 2018 154 777

## Beschreibung

Ein Aspekt der Erfindung betrifft ein Verfahren zum Verzögern eines Kraftfahrzeugs bei einer Notbremsung. Ein weiterer Aspekt der Erfindung betrifft ein Kraftfahrzeug.

Betriebsbremsanlagen von modernen Kraftfahrzeugen, beispielsweise Personenkraftwagen, weisen häufig hydraulische Bremsen sowohl an einer Vorderachse als auch an einer Hinterachse des Kraftfahrzeugs auf. Diese hydraulischen Bremsen werden als Betriebsbremsen eingesetzt, um das Kraftfahrzeug beim Betrieb, also während der Fahrt, wirksam zu verzögern und damit abzubremsen. Bei hydraulischen Bremsen wird Bremsflüssigkeit durch Bremsleitungen in die Radbremsen verschoben. Diese Volumenverschiebung ist notwendig aufgrund der Elastizitäten der Bremsschläuche, Bremsleitungen, Bremsbeläge und Bremsenfaust. Bis zur Eingriffsschwelle eines Antiblockiersystems des Kraftfahrzeugs, bei zirka 80 bar, kommen hier in Summe über alle vier Räder zirka 15 cm³ an Bremsflüssigkeit bei Mittelklassefahrzeugen zusammen.

Bei Kraftfahrzeugen, die durch einen Fahrer selbst geführt und in dem Zusammenhang auch gebremst werden und bei welchen der Fahrer dazu ein entsprechendes Bremspedal des Kraftfahrzeugs betätigt, wirkt die Fußkraft des Fahrers zusammen mit der Kraft des Bremskraftverstärkers auf den Kolben im Hauptbremszylinder. Hier wird der Bremsdruck erzeugt, und durch die Vorwärtsbewegung des Bremspedals und des damit verbundenen Kolbens im Hauptbremszylinder wird die Bremsflüssigkeit in die Radbremse verschoben.

Aus der EP 1 839 985 B1 ist ein Kraftfahrzeug bekannt, welches durch einen Fahrer gesteuert wird. Der Fahrer betätigt dort somit auch ein Bremspedal und somit die Betriebsbremsanlage. In diesem Stand der Technik ist darüber hinaus auch vorgesehen, dass ein Verzögern des Kraftfahrzeugs, welches ein Elektrofahrzeug oder ein Hybrid-Fahrzeug sein kann, zusätzlich auch durch den Elektroantrieb erfolgen kann. Dazu wird ein dort so bezeichneter Motorgenerator so betrieben, dass er eine dort so bezeichnete regenerative Bremsung durchführt und eine entsprechende Bremskraft erzeugt.

Ferner offenbart die WO 2016/146277 A1 ein Verfahren zum Betreiben eines rekuperativen Bremssystems eines Fahrzeugs und eine Steuerungsvorrichtung für ein rekuperatives Bremssystem eines Fahrzeugs.

Aus der US 2018/0154777 A1 ist ein Verfahren zum Durchführen eines automatischen Notbremsvorgangs bekannt.

Darüber hinaus sind automatisch fahrende beziehungsweise autonom fahrende Kraftfahrzeuge bekannt. Bei diesen Kraftfahrzeugen muss der Bremsdruck und die damit verbundene Verschiebung der Bremsflüssigkeit in die Radbremsen vollständig durch das Bremssystem selbst erzeugt werden. Bei einem Schlupfregelsystem (ESC - Electronic Stability Control) wird dazu dessen elektrisch angetriebene Rückförderpumpe genutzt. Bei einem aktiven Unterdruck-Bremskraftverstärker wird die Druckdifferenz innerhalb der zwei Verstärkerkammern erhöht, sodass die Kraft auf den Kolben des Hauptbremszylinders erhöht und das Bremsflüssigkeitsvolumen verschoben wird. Bei einem elektromechanischen Bremskraftverstärker wird durch dessen Elektromotor über eine Spindel oder Zahnstange die Kraft auf den Hauptbremszylinder erhöht und das Bremsflüssigkeitsvolumen verschoben. Diese automatisierten Vorgänge dauern in gegenwärtig bekannten Ausgestaltungen der Systeme länger, als wenn ein geübter Fahrer mit seinem Fuß das Bremspedal sehr schnell und kraftvoll betätigt. Gewertet wird dabei der Zeitraum vom ersten Anliegen des Bremswunsches bis zu dem Zeitpunkt, zu dem das erste Vorderrad die Blockiergrenze erreicht hat. Ab diesem Zeitpunkt ist das Antiblockiersystem zur Verhinderung des Radblockierens aktiv und die Abbremsung kann nicht weiter gesteigert werden.

Bei einem elektromechanischen Bremskraftverstärker beträgt dieser Zeitraum zirka 200 ms, bei einem Sechs-Kolben-Schlupfregelsystem zirka 400 ms und bei einem Zwei-Kolben-Schlupfregelsystem zirka 600 ms. Ein Fahrer, der das Fahrzeug führt und ein Bremspedal betätigt, schafft dies unter optimalen Bedingungen in zirka 120 ms. Bei automatisch fahrenden Fahrzeugen ist der Fahrer jedoch in die Fahreraufgabe nicht involviert und wird den Bremsvorgang nicht manuell aktivieren.

Insbesondere bei autonom fahrenden Kraftfahrzeugen, die die Autonomiestufe 5 aufweisen, ist gar kein Bremspedal mehr vorhanden. Insbesondere besteht bei autonom fahrenden Fahrzeugen die Problematik, dass der aktive Bremsdruckaufbau ohne Unterstützung durch den Fahrerfuß aller aktuellen Bremssysteme langsamer ist als bei einer aktiven Bremsung durch den Fahrer selbst, wenn er ein vorhandenes Bremspedal betätigt. So verlängert sich bei einer Notbremsung des Kraftfahrzeugs der Anhalteweg, der den Weg ab dem erstmaligen Setzen des Bremswunsches bis zum Stillstand definiert, beispielsweise aus 100 km/h um zirka 4 m.

Es ist Aufgabe der vorliegenden Erfindung, ein Verfahren zu schaffen, bei welchem bei einer Notbremsung das bremsend wirkende Drehmoment an zumindest einem Rad schnellstmöglich aufgebaut werden kann. Es soll also eine Notbremsung, insbesondere bei einem autonom fahrenden Fahrzeug, verbessert werden.

Diese Aufgabe wird durch ein Verfahren und ein Kraftfahrzeug gemäß den unabhängigen Ansprüchen gelöst.

Ein Aspekt der Erfindung betrifft ein Verfahren zum Verzögern eines Kraftfahrzeugs bei einer Notbremsung. Die gesamte Notbremsung wird automatisch durch ein Längsdynamiksystem des Kraftfahrzeugs durchgeführt. Das Längsdynamiksystem weist einen Elektromotor eines Elektroantriebs des Kraftfahrzeugs auf, welcher ein erstes Bremsmoment bei der Notbremsung erzeugt. Das Längsdynamiksystem weist des Weiteren eine dazu separate Betriebsbremsanlage auf. Zum Notbremsen wird ein Gesamtbremsmoment automatisch durch das Längsdynamiksystem des Kraftfahrzeugs aufgebaut beziehungsweise erzeugt. Dieses Gesamtbremsmoment wirkt zumindest auf ein Antriebsrad des Kraftfahrzeugs. Das Erzeugen des Gesamtbremsmoments erfolgt derart, dass durch den Elektromotor eines Elektroantriebs des Kraftfahrzeugs in einem Zeitintervall, beginnend mit dem automatischen Einleiten der Notbremsung und kleiner der Gesamtzeitdauer der Notbremsung, und in welchem diesen Zeitintervall das Gesamtbremsmoment noch nicht alleine durch eine Betriebsbremsanlage des Längsdynamiksystems erzeugt werden kann, ein erstes Bremsmoment zumindest als Anteil am Gesamtbremsmoment erzeugt wird.

Zum Erzeugen des Gesamtbremsmoments wird durch einen Elektromotor eines Elektroantriebs des Kraftfahrzeugs ein erstes Bremsmoment erzeugt beziehungsweise aufgebaut und durch eine Betriebsbremsanlage des Kraftfahrzeugs zeitweise gleichzeitig mit dem ersten Bremsmoment ein messbares zweites Bremsmoment bei der Notbremsung erzeugt. Es wird also die Notbremsung automatisch durch ein Längsdynamiksystem des Kraftfahrzeugs eingeleitet und das Gesamtbremsmoment aufgebaut. Insbesondere das durch die Betriebsbremsanlage des Kraftfahrzeugs erzeugte zweite Bremsmoment wird selbstständig beziehungsweise automatisch durch die Betriebsbremsanlage aufgebaut beziehungsweise erzeugt. Zusätzlich oder anstatt dazu kann vorgesehen sein, dass zum Notbremsen ein Gesamtbremsmoment automatisch durch das Längsdynamiksystem des Kraftfahrzeugs erzeugt beziehungsweise aufgebaut wird, wobei dazu in einem Zeitintervall beginnend mit dem automatischen Einleiten der Notbremsung, das kleiner als die gesamte Zeitdauer der Notbremsung ist, nur das erste Bremsmoment, das durch den Elektromotor erzeugt wird, aufgebaut wird.

Anzumerken ist, dass mit dem Beginn der Notbremsung auch die Betriebsbremsanlage arbeitet beziehungsweise aktiviert wird aber durch das erforderliche Verschieben der Bremsflüssigkeit noch kein messbares zweites Bremsmoment vorliegt beziehungsweise erzeugt wird.

Durch das vorgeschlagene Verfahren ist es ermöglicht, ein an das Längsdynamiksystem angefordertes Soll-Bremsmoment beziehungsweise Gesamtbremsmoment schnellstmöglich bereitzustellen. Dabei wird der Anteil am Gesamtbremsmoment, den die Betriebsbremsanlage in dem Zeitintervall, beginnend mit der Notbremsung und kürzer der Gesamtdauer der Notbremsung bis zum Stillstand des Kraftfahrzeugs, nicht beziehungsweise noch nicht aufbringen kann, soweit möglich vom Elektromotor alleine aufgebracht und/oder ergänzend aufgebracht. Dies erfolgt insbesondere für ein derartiges Zeitintervall bis das Gesamtbremsmoment alleine durch das zweite Bremsmoment gebildet wird.

Durch das vorgeschlagene Verfahren ist es ermöglicht, dass bei einem Kraftfahrzeug, welches als Elektrofahrzeug oder Hybrid-Fahrzeug ausgebildet ist, der Elektromotor des Elektroantriebs bei einem derartigen spezifischen Verzögerungsszenario, nämlich einer Notbremsung, genutzt wird. Elektromotoren können ihr Antriebs- oder Bremsmoment sehr schnell verändern. Zeiten von zirka 2 ms sind in dem Zusammenhang technisch möglich. In einem derartig kleinen Zeitintervall kann der Elektromotor sein Drehmoment von einem Wert 0 bis zu einem maximalen Moment ändern.

Durch diese Vorgehensweise ist es insbesondere bei Kraftfahrzeugen, die ohne Betätigung eines Bremspedals durch einen Fahrer die erforderliche Bremswirkung und somit den Aufbau des erforderlichen Bremsmoments erzeugen, ermöglicht, eine verbesserte Notbremsung zu erreichen. Dies bedeutet, dass auch bei derartigen Konstellationen, bei denen kein Bremspedal durch einen Fahrer betätigt wird oder betätigt werden kann, es nun auch möglich ist, nun bestmöglich eine sehr hohe Bremswirkung zu erzielen. Gerade bei derartigen Konstellationen kann in dem Zusammenhang dann auch eine Notbremsung durchgeführt werden, bei der sich der Verzögerungsweg beziehungsweise der Anhalteweg nicht unerwünscht verlängert.

Durch die oben geschilderten Möglichkeiten kann somit in einer spezifischen Zeitphase gleichzeitig ein Bremsmoment des Elektromotors und ein Bremsmoment der Betriebsbremsanlage erzeugt werden, um hier und somit in dieser spezifischen Zeitphase eine bestmögliche Verzögerung erreichen zu können. Andererseits kann zusätzlich in dem bereits genannten anderen Zeitintervall zu Beginn einer Notbremsung bereits unverzüglich ein Bremsmoment durch den Elektromotor aufgebaut werden. In dem Zusammenhang kann die oben dargelegte technische Vorteilhaftigkeit eines Elektromotors, der ein Bremsmoment sehr schnell aufbauen kann, bereits genutzt werden, bevor eine Betriebsbremsanlage ihr Bremsmoment aufbauen kann.

Dieses genannte Szenario kann in vorteilhafter Weise bei einem autonom fahrenden Kraftfahrzeug vorgesehen sein. Insbesondere kann es bei einem Kraftfahrzeug, welches autonom mit der Autonomiestufe 5 (Level 5) betrieben wird, sehr vorteilhaft sein. Ein Kraftfahrzeug, welches die Autonomiestufe 5 aufweist, weist definitionsgemäß keine Pedale auf. Dadurch ist es bei einer derartigen Konfiguration eines Kraftfahrzeugs grundsätzlich für einen Fahrer nicht mehr möglich, ein Bremspedal zu betätigen. Gerade bei derartigen Ausgestaltungen ist auch aufgrund der eingangs geschilderten Problematik die vorgeschlagene Durchführung einer Notbremsung besonders vorteilhaft.

Es kann jedoch auch dann vorteilhaft sein, wenn das Kraftfahrzeug ein Bremspedal aufweist und grundsätzlich die Möglichkeit für einen Fahrer besteht, dieses Bremspedal zu betätigen. Selbst bei einer derartigen Ausgestaltung kann in vorteilhafter Weise vorgesehen sein, dass bei einer Notbremsung zunächst mit einer elektronischen Verarbeitungseinheit geprüft wird, ob das Bremspedal durch einen Fahrer, insbesondere innerhalb eines vorgegebenen Zeitintervalls, betätigt wird, und wenn dies nicht der Fall ist, wird das oben dargelegte Szenario bei der Notbremsung durchgeführt. Somit kann auch bei Ausführungen eines Kraftfahrzeugs, bei welchem prinzipiell noch ein Bremspedal vorhanden wäre, jedoch dies innerhalb eines sehr kurzen Zeitintervalls vom Fahrer nicht betätigt wird, dann das oben erläuterte automatische Verzögerungsszenario durchgeführt wird. Beispielsweise kann ein derartiges Betätigen eines Bremspedals nicht durchgeführt werden, wenn der Fahrer beispielsweise unachtsam ist und die Verkehrssituation nicht erkennt oder nicht so einschätzt, dass bereits eine Notbremsung erforderlich wäre. Andererseits kann dies auch dann vorteilhaft sein, wenn der geübte Fahrer eine spezifische Verkehrssituation zwar erkennt, aber falsch einschätzten und daher das Bremspedal nicht oder erst verzögert betätigen würden. Insbesondere ist das oben geschilderte Szenario auch dann vorteilhaft, wenn ein Kraftfahrzeug ein Bremspedal hat und erkannt wird, dass der Fahrer, beispielsweise aufgrund von Müdigkeit oder bereits einem beginnenden Einschlafen, eine kritische Verkehrssituation, bei welcher eine Notbremsung erforderlich wäre, nicht erkennt und somit auch mit hoher Wahrscheinlichkeit das Bremspedal nicht betätigen wird. Darüber hinaus kann auch bei Fahrzeugen, die beispielsweise die Autonomiestufe 4 oder die Autonomiestufe 3 aufweisen, die Situation auftreten, dass ein Fahrer des Fahrzeugs, welches dann noch ein Bremspedal aufweist, die Situation falsch einschätzt und davon ausgeht, dass eine Verkehrssituation durch das Fahrzeug selbst aufgrund seiner voreingestellten Autonomiestufe löst beziehungsweise durchführt und in dem Zusammenhang gegebenenfalls vergisst oder falsch einschätzt, dass er als Fahrer selbst das Bremspedal betätigen müsste. Dies kann gerade bei derartigen Konstellationen, bei welchen Teilaufgaben durch das Fahrzeug selbst durchgeführt und erledigt werden, andererseits bei anderen Situationen auch der Fahrer selbst entsprechende Handlungen durchführen muss, auftreten. Insbesondere beispielsweise dann, wenn in abrupt auftretenden Situationen der Fahrer aufgrund seiner Nervosität oder dem nicht damit Rechnen, dass eine derartige Situation kommt, augenblicklich nicht mehr weiß, welche Handlung er nun selbst durchzuführen hat. In diesen Situationen kann dann, wenn nicht innerhalb eines spezifischen Zeitintervalls ein tatsächliches Betätigen des Bremspedals durch den Fahrer erfolgt, derartiges erkannt werden und dann das oben dargelegte automatische Durchführen der Notbremsung durch das Längsdynamiksystem durchgeführt werden. Dies erfolgt dann ohne einen Beitrag des Fahrers. Dies bedeutet, dass die automatische Notbremsung vollständig ohne ein Betätigen eines Bremspedals von einem Fahrer durchgeführt wird. Dies ist dann auch unabhängig davon, ob ein derartiges Bremspedal vorhanden ist oder nicht.

Allgemein kann vorgesehen sein, dass das Erfordernis einer vollständig automatisch durchgeführten Notbremsung durch eine elektronische Verarbeitungseinheit des Kraftfahrzeugs bestimmt wird. Es wird also auch bestimmt, wann die Notbremsung erforderlich ist und beginnen muss. Dazu können Umgebungsinformationen der Umgebung des Kraftfahrzeugs und/oder Informationen über das Kraftfahrzeug selbst, beispielsweise Betriebsparameter, berücksichtigt werden. Umgebungsinformationen können beispielsweise mit zumindest einer Erfassungseinheit des Kraftfahrzeugs selbst erfasst werden und/oder anderweitig erfasst und dem Kraftfahrzeug bereitgestellt werden. Somit kann eine Notbremsung auch dann erforderlich sein, wenn sich aufgrund der Betriebssituation des Kraftfahrzeugs beim Fortbewegen, beispielsweise aufgrund eines Ausfalls einer Funktionskomponente des Kraftfahrzeugs, diese Notwendigkeit ergibt.

Vorzugsweise wird beim automatischen Beginnen der Notbremsung durch das Längsdynamiksystem in einem Zeitintervall, beginnend mit dem automatischen Einleiten der Notbremsung bis zu einem messbar erzeugten zweiten Bremsmoment der Betriebsbremsanlage, nur das erste Bremsmoment des Elektromotors zum Aufbringen des Gesamtbremsmoments erzeugt. In einer vorteilhaften Ausführung ist somit vorgesehen, dass beim automatischen Beginnen der Notbremsung durch das Längsdynamiksystem nur das erste Bremsmoment des Elektromotors messbar erzeugt wird. Dies ist dann insbesondere die oben genannte weitere Zeitdauer beziehungsweise das weitere Zeitintervall. Da der Elektromotor, wie bereits oben dargelegt, sehr schnell und insbesondere deutlich schneller als die Betriebsbremsanlage, ein Bremsmoment aufbauen kann, wird die Notbremsung dann zunächst nur mit dem erzeugten Bremsmoment des Elektromotors vollzogen. In dieser Phase stellt dann nur das erste Bremsmoment des Elektromotors das Gesamtbremsmoment dar.

Insbesondere wird das erste Bremsmoment automatisch nur bis zu einem Bremsmoment-Grenzwert erzeugt. Bei diesem Bremsmoment-Grenzwert wird ein Antiblockiersystem des Kraftfahrzeugs aktiviert. Vorzugsweise wird der Aufbau des ersten Bremsmoments sehr schnell, insbesondere maximal schnell, aufgebaut. Insbesondere erfolgt dies innerhalb eines Zeitintervalls kleiner 3 ms.

Vorzugsweise erfolgt der Aufbau des ersten Bremsmoments bis zu einem Bremsmoment-Grenzwert schneller, als ein Zeitintervall, beginnend mit dem automatischen Einleiten der Notbremsung bis zu einem messbar erzeugten zweiten Bremsmoment der Betriebsbremsanlage, dauert. Damit wird innerhalb eines Zeitintervalls, in dem das erste Bremsmoment bis zum Bremsmoment-Grenzwert aufgebaut wurde, die Notbremsung nur oder im Wesentlichen nur mit diesem ersten maximalen Bremsmoment, welches dem Bremsmoment-Grenzwert entspricht, durchgeführt. Insbesondere ist vorgesehen, dass der Anstieg des ersten Bremsmoments durch den Elektromotor des Elektroantriebs dann beendet wird, wenn das erste Bremsmoment den Bremsmoment-Grenzwert erreicht hat. Dies bedeutet, dass das erste Bremsmoment nicht über den Bremsmoment-Grenzwert hinaus erhöht wird. Insbesondere wird das erste Bremsmoment so geregelt, dass es das aufgebaute erste Bremsmoment auf dem Bremsmoment-Grenzwert beziehungsweise im Wesentlichen auf dem Bremsmoment-Grenzwert hält. Dies erfolgt insbesondere so lange, bis das zweite Bremsmoment der Betriebsbremsanlage aufgebaut wird. Insbesondere wird in dem Zusammenhang das erste Bremsmoment in Zusammenarbeit mit dem Antiblockiersystem derart erzeugt, dass, wenn ein erstes Antriebsrad die Blockiergrenze erreicht, die Erzeugung des ersten Bremsmoments im Wesentlichen konstant und insbesondere im Bereich des Bremsmoment-Grenzwerts gehalten wird.

Ein Antriebsrad kann ein Frontrad oder ein Hinterrad sein. Bei einem Allradantrieb eines Kraftfahrzeugs können auch ein Frontrad und ein Hinterrad Antriebsräder sein.

In einer vorteilhaften Ausführung ist vorgesehen, dass in dem Zeitintervall der Notbremsung, in welchem das erste Bremsmoment und ein messbares zweites Bremsmoment gleichzeitig erzeugt werden, diese beiden Bremsmomente so erzeugt werden, dass die Summe im Wesentlichen konstant bleibt. Insbesondere bedeutet dies, dass die Summe der Bremsmomente in einem Wertintervall von +/-20%, insbesondere +/-15%, insbesondere +/-10%, um den Bremsmoment-Grenzwert liegt. Dadurch kann auch in diesem weiteren, insbesondere zweiten, Zeitintervall, welches vorzugweise direkt auf das oben genannte erste Zeitintervall, in dem nur das erste Bremsmoment vorliegt folgt, eine schnellstmögliche Verzögerung des Kraftfahrzeugs erreicht werden.

In einer vorteilhaften Ausführung ist vorgesehen, dass in dem Zeitintervall der Notbremsung, in welchem das erste Bremsmoment und das messbare zweite Bremsmoment gleichzeitig erzeugt werden, das erste Bremsmoment reduziert wird, insbesondere kontinuierlich reduziert wird, und das zweite Bremsmoment erhöht wird, insbesondere kontinuierlich erhöht wird. Dies bedeutet auch, dass mit steigendem zweiten Bremsmoment das erste Bremsmoment verringert wird. Dazu, wenn die Betriebsbremsanlage daher ihr Bremsmoment aufbauen kann, steht deren Bremsmoment quasi im Vordergrund und das erste Bremsmoment des Elektromotors kann reduziert werden.

Es kann vorgesehen sein, dass der Anstieg des messbaren zweiten Bremsmoments in diesem zweiten Zeitintervall linear ist oder zumindest in einer ersten Näherung des Kennlinienverlaufs als linear angesehen werden kann. Zusätzlich oder anstatt dazu kann vorgesehen sein, dass der Abfall des ersten Bremsmoments in diesem zweiten Zeitintervall, insbesondere ebenfalls, linear ist oder zumindest in erster Näherung des Kennlinienverlaufs als linear angesehen werden kann. Insbesondere kann es bei einer derartigen Ausgestaltung vorgesehen sein, dass die Kennlinienverläufe der Bremsmomente in diesem zweiten Zeitintervall jeweils gleich, jedoch gegenläufig erzeugt, sind.

Es ist zu erwähnen, dass jedoch auch anderweitige Kurvenverläufe der Bremsmomente in diesem zweiten Zeitintervall vorgesehen sein können. Insbesondere kann dies auch davon abhängen, welche Umgebungsbedingungen, wie beispielsweise Temperatur, in der Umgebung des Kraftfahrzeugs vorherrschen. Diese Umgebungsbedingungen können einen Einfluss auf die Bremsflüssigkeit haben, insbesondere auf deren Viskosität. Dadurch ergeben sich in unterschiedlichen Umgebungsbedingungen auch unterschiedliche Verläufe, insbesondere des zweiten Bremsmoments, wenn dieses aufgebaut wird.

In vorteilhafter Weise erfolgt das Reduzieren des ersten Bremsmoments in diesem zweiten Zeitintervall abhängig von dem Erhöhen des zweiten Bremsmoments. Dies bedeutet, dass der Aufbau des zweiten Bremsmoments quasi bestimmt, wie die Reduzierung des ersten Bremsmoments zu erfolgen hat, insbesondere dann, wenn in Summe der beiden Bremsmomente ein spezifischer Summenwert der beiden Bremsmomente erreicht werden soll.

In einer vorteilhaften Ausführung ist vorgesehen, dass das Reduzieren des ersten Bremsmoments derart erfolgt, dass das erste Bremsmoment 0 beträgt, wenn das zweite Bremsmoment auf einen Bremsmoment-Grenzwert erhöht ist, bei welchem ein Antiblockiersystem des Kraftfahrzeugs aktiviert wird. Insbesondere zu diesem Zeitpunkt wird der Beitrag des Elektromotors zum Verzögern des Kraftfahrzeugs bei der Notbremsung dann nicht mehr benötigt und das Gesamtbremsmoment wird ab diesem Zeitpunkt dann vorzugsweise nur noch durch das zweite Bremsmoment erzeugt.

Erfindungsgemäß ist es vorgesehen, dass ein erstes Zeitintervall, in dem nur das erste Bremsmoment messbar erzeugt wird, und somit nur das erste Bremsmoment zum Gesamtbremsmoment beiträgt, und bis zu einem Bremsmoment-Grenzwert aufgebaut ist, bei welchem ein Antiblockiersystem des Kraftfahrzeugs aktiviert wird, kleiner ist, als ein zweites Zeitintervall, in welchem das erste Bremsmoment und das messbare zweite Bremsmoment gleichzeitig erzeugt werden. In einer Ausführung kann vorgesehen sein, dass das erste Zeitintervall maximal die Hälfte des zweiten Zeitintervalls beträgt. Dies ist jedoch nur beispielhaft zu verstehen und soll nicht einschränkend verstanden werden. Es können daher auch anderweitige Verhältnisse der Zeitintervalle gegeben sein.

Es kann vorgesehen sein, dass die Betriebsbremsanlage ein Zwei-Kolben-Schlupfregelsystem ist. Insbesondere beträgt bei einer derartigen Ausführung die Zeitdauer von einem Anliegen des Bremswunsches bis zu einem Zeitpunkt, zu dem der Aufbau des zweiten Bremsmoments beginnt etwa 200 ms. Die Zeitdauer, in der das zweite Bremsmoment bei diesem Zwei-Kolben-Schlupfregelsystem (seit dem Anliegen eines Bremswunsches betrachtet) bis zu dem Bremsmoment-Grenzwert aufgebaut ist, beträgt etwa 600 ms.

Es kann jedoch auch vorgesehen sein, dass die Betriebsbremsanlage ein Sechs-Kolben-Schlupfregelsystem ist. Insbesondere beträgt bei einer derartigen Ausführung die Zeitdauer von einem Anliegen des Bremswunsches bis zu einem Zeitpunkt, zu dem der Aufbau des zweiten Bremsmoments beginnt etwa 150 ms. Die Zeitdauer, zu dem das zweite Bremsmoment bei diesem Sechs-Kolben-Schlupfregelsystem (seit dem Anliegen eines Bremswunsches betrachtet) bis zu dem Bremsmoment-Grenzwert aufgebaut ist, beträgt etwa 400 ms.

Es kann jedoch auch vorgesehen sein, dass die Betriebsbremsanlage ein elektromechanischer Bremskraftverstärker ist. Insbesondere beträgt bei einer derartigen Ausführung die Zeitdauer von einem Anliegen des Bremswunsches bis zu einem Zeitpunkt, zu dem der Aufbau des zweiten Bremsmoments beginnt etwa 30 ms. Der Zeitpunkt, zu dem das zweite Bremsmoment bei diesem elektromechanischen Bremskraftverstärker (seit dem Anliegen eines Bremswunsches betrachtet) bis zu dem Bremsmoment-Grenzwert aufgebaut ist, beträgt etwa 150 ms.

Ein weiterer Aspekt der Erfindung betrifft ein Kraftfahrzeug mit mehreren Rädern und mit einem Elektroantrieb zum Erzeugen von elektrischer Antriebsenergie für das Kraftfahrzeug. Das Kraftfahrzeug weist darüber hinaus ein Längsdynamiksystem auf, welches zumindest bei einer Notbremsung des Kraftfahrzeugs einen Elektromotor des Elektroantriebs des Kraftfahrzeugs zur Erzeugung eines Bremsmoments nutzt, und eine dazu separate Betriebsbremsanlage aufweist. Das Kraftfahrzeug weist darüber hinaus eine elektronische Verarbeitungseinheit auf, welche zum Durchführen eines Verfahrens gemäß dem oben genannten Aspekt oder einer vorteilhaften Ausgestaltung davon ausgebildet ist. Insbesondere wird dieses Verfahren mit dem Kraftfahrzeug, insbesondere durch die elektronische Verarbeitungseinheit, durchgeführt. Die elektronische Verarbeitungseinheit kann eine Steuer- und/oder Regeleinheit sein. Sie kann Bestandteil des Elektroantriebs und/oder der Betriebsbremsanlage, die auch als Betriebsbremssystems bezeichnet werden kann, sein.

Das Kraftfahrzeug kann darüber hinaus einen oder mehrere Sensoren aufweisen, die Informationen erfassen, die der elektronischen Verarbeitungseinheit, insbesondere zum Durchführen des Verfahrens, bereitgestellt werden können. Dies können sowohl Umgebungsinformationen als auch Informationen von Komponenten des Kraftfahrzeugs selbst sein. Insbesondere können dies auch Informationen eines Längsdynamiksystems selbst sein.

Mit der Erfindung ist es insbesondere ermöglicht, einen Elektroantrieb des Kraftfahrzeugs bei Notbremsungen kurzzeitig zur Unterstützung der Betriebsbremsanlage zu nutzen. Insbesondere baut dabei der Elektromotor des Elektroantriebs zu Beginn einer Notbremsung vorzugsweise relativ kurzzeitig ein sehr hohes Bremsmoment auf. Bevorzugt soll dabei ein maximales Bremsmoment des Elektromotors aufgebaut werden. Dieses maximale Bremsmoment entspricht insbesondere einem Bremsmoment-Grenzwert, ab dem ein Antiblockiersystem des Kraftfahrzeugs aktiv wird. Insbesondere wird das Bremsmoment des Elektromotors so lange erzeugt, solange die Betriebsbremsanlage ihr Bremsmoment durch den verzögerten Bremsdruck aufbaut und nicht ausreichend liefern kann, insbesondere auch nicht bis zu einem Bremsmoment-Grenzwert liefern kann.

Als Notbremsung wird im Sinne der Erfindung eine hohe Verzögerung des Kraftfahrzeugs von beispielsweise mehr als 3 m/s² verstanden. Zusätzlich oder alternativ kann die Notbremsung bei einer Dynamik der Verzögerung von mehr als 10 m/s³ vorliegen. Die Dynamik, welche auch als Ruck bezeichnet werden kann, entspricht dabei der zeitlichen Ableitung der Verzögerung. Derart große Werte für Verzögerung und Dynamik werden im normalen Fahrbetrieb nicht erreicht.

Gerade dann, wenn das Kraftfahrzeug vorzugsweise in der Autonomiestufe 5 und damit vollautomatisiert betrieben wird, ist nicht zuletzt zur Gewichtseinsparung vorgesehen, dass auf ein Bremspedal verzichtet wird. Wenn ein Verzögern und somit ein Abbremsen des Kraftfahrzeugs nötig ist, so kann beispielsweise eine automatische Fahrfunktion des Kraftfahrzeugs von der elektronischen Verarbeitungseinheit, welche auch als Bremsregelsystem bezeichnet werden kann, die Verzögerung des Kraftfahrzeugs anfordern. Durch die automatische Fahrfunktion kann der autonome Fahrbetrieb des Kraftfahrzeugs erfolgen. Die elektronische Verarbeitungseinheit kann unter Berücksichtigung von fahrdynamischen Eigenschaften des Kraftfahrzeugs und einer bekannten Momentenaufbaudynamik der Betriebsbremsanlage und des Elektromotors eine bedarfsgerechte Bremsmomentenverteilung für alle Radbremsen der Betriebsbremsanlage ermitteln. Bei einer Betriebsbremsanlage kann bei einem dem wenigstens einen Antriebsrad zugeordneten Bremssattel ein Bremskolben einer Radbremse zum Abbremsen des wenigstens einen Antriebsrads vorgesehenen Bremsbelag wirken. Durch Aktivierung der Betriebsbremsanlage kann der Bremsbelag beispielsweise auf eine Bremsscheibe gedrückt werden, um das zweite Bremsmoment auf das Antriebsrad auszuüben. Es kann vorgesehen sein, dass ein zum Aufbringen des zweiten Bremsmoments verwendeter Bremsdruck durch eine hydraulische Rückförderpumpe der Betriebsbremsanlage aufgebaut wird. Die hydraulische Rückförderpumpe der Betriebsbremsanlage kann Bestandteil eines Schlupfregelsystems des Kraftfahrzeugs sein. Das Schlupfregelsystem kann ein Antiblockiersystem aufweisen. Darüber hinaus kann das Schlupfregelsystem eine Antriebsschlupfregelung und/oder einer Regelung zur Verhinderung von Schleudern des Kraftfahrzeugs, auch bekannt als Fahrdynamikregelsystem, aufweisen.

Im Folgenden ist ein Ausführungsbeispiel der Erfindung beschrieben. Hierzu zeigt:
- Fig. 1: eine schematische Darstellung eines Ausführungsbeispiels eines erfindungsgemäßen Kraftfahrzeugs; und
- Fig. 2: ein vereinfachtes Diagramm, in dem der zeitliche Verlauf eines Gesamtbremsmoments des Kraftfahrzeugs bei einer Notbremsung dargestellt ist.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

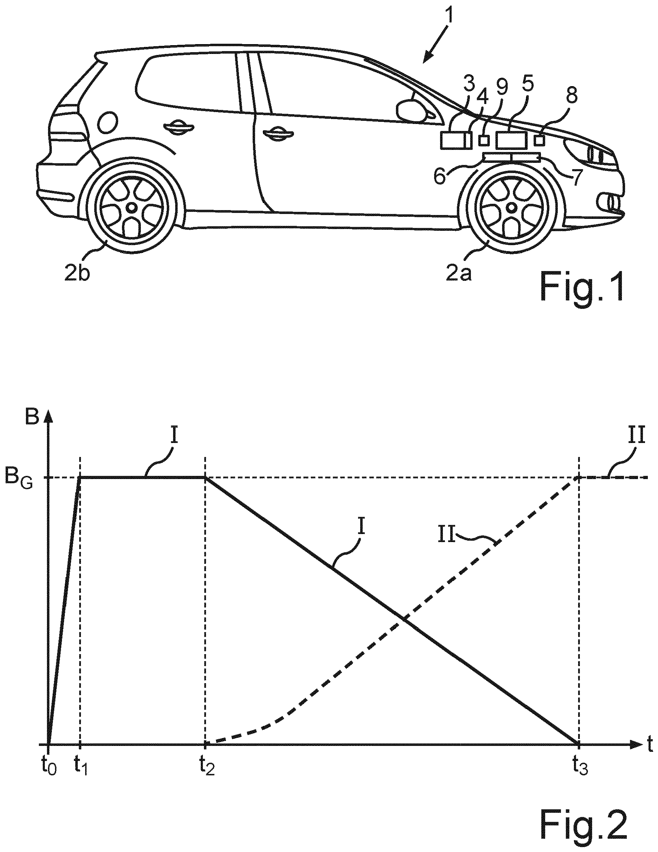

In Fig. 1 ist in einer vereinfachten Darstellung ein Kraftfahrzeug 1 gezeigt. Das Kraftfahrzeug 1 ist ein Personenkraftwagen. Das Kraftfahrzeug 1 weist zwei Vorderräder auf, von denen in der gezeigten Seitenansicht das rechte Vorderrad 2a zu erkennen ist. Darüber hinaus weist das Kraftfahrzeug 1 zwei Hinterräder auf, von denen in der Darstellung in Fig. 1 das rechte Hinterrad 2b gezeigt. ist.

Das Kraftfahrzeug 1 ist ein Hybrid-Fahrzeug oder ein Elektrofahrzeug. Es weist diesbezüglich einen Elektroantrieb 3 auf. Der Elektroantrieb 3 weist einen Elektromotor 4 auf. Mit dem Elektroantrieb 3 wird elektrische Energie bidirektional in mechanische Energie umgewandelt wird, durch welche das Kraftfahrzeug 1 angetrieben und gebremst werden kann.

Darüber hinaus weist das Kraftfahrzeug 1 ein Längsdynamiksystem 5 auf. Das Längsdynamiksystem 5 weist eine zum Elektromotor 4 separate Betriebsbremsanlage 6 auf. Die Betriebsbremsanlage 6, die auch als Betriebsbremssystem bezeichnet werden kann, kann eine hydraulische Bremse sein. Zu der Betriebsbremsanlage 6 zugehörig kann ein Schlupfregelsystem 7 sein. Darüber hinaus kann das Kraftfahrzeug 1 zusätzlich ein Fahrdynamikregelsystem 8 aufweisen.

Insbesondere weist das Kraftfahrzeug 1 eine elektronische Verarbeitungseinheit 9 auf. Die elektronische Verarbeitungseinheit 9 kann eine Steuer- und/oder Regeleinheit sein.

Das Kraftfahrzeug 1 kann insbesondere durch die elektronische Verarbeitungseinheit 9 dazu ausgebildet sein, ein nachfolgend erläutertes Verfahren zum Verzögern des Kraftfahrzeugs 1 bei einer Notbremsung durchzuführen. Insbesondere wird dieses Verfahren durchgeführt.

Dazu ist in Fig. 2 ein Diagramm gezeigt, in dem ein Bremsmoment B in Abhängigkeit von der Zeit t dargestellt ist. Bei dem Verfahren wird die Notbremsung automatisch durch das Längsdynamiksystem 5 des Kraftfahrzeugs 1 eingeleitet. Dies bedeutet insbesondere, dass die Notbremsung vollständig ohne Betätigen eines Bremspedals durchgeführt wird. Dies kann dann der Fall sein, wenn das Kraftfahrzeug 1 ein vollautonom fahrendes Fahrzeug ist, welches die Autonomiestufe 5 aufweist. Bei derartigen Ausgestaltungen weist das Kraftfahrzeug 1 dann grundsätzlich kein Bremspedal mehr auf. Das automatische Einleiten der Notbremsung kann jedoch auch dann der Fall sein, wenn das Kraftfahrzeug 1 ein Bremspedal aufweist, dieses bei der Notbremsung durch den Fahrer aus spezifischen Gründen nicht betätigt wird. Insbesondere kann gerade in einem derartigen Fall die elektronische Verarbeitungseinheit 9 auch dazu ausgebildet sein, eine derartige Situation zu erfassen und zu verarbeiten.

Bei einer derartigen vollautomatischen Notbremsung wird ein Gesamtbremsmoment automatisch durch das Längsdynamiksystem 5 des Kraftfahrzeugs 1 erzeugt. Bei einer Notbremsung wird durch den Elektromotor 4, der bei diesem Verzögern als Bestandteil des Längsdynamiksystems 5 anzusehen ist, ein erstes Bremsmoment erzeugt. In Fig. 2 ist dazu gezeigt, dass zu einem Zeitpunkt t0 die automatische beziehungsweise durch das System durchgeführte selbstständige Notbremsung beginnt. Zu diesem Zeitpunkt t0 wird dann sehr schnell ein erstes Bremsmoment aufgebaut, bis ein Bremsmoment-Grenzwert B_{G} erreicht wird. Im gezeigten Beispiel erreicht dieses erste Bremsmoment den Bremsmoment-Grenzwert B_{G} zu einem Zeitpunkt t1. Insbesondere ist dies nach zirka 2 ms der Fall. Auch die Betriebsbremsanlage 6 arbeitet ab dem Zeitpunkt t0. Aufgrund der erforderlichen Verschiebung der Bremsflüssigkeit wird jedoch bis zum Zeitpunkt t2 noch kein messbares zweites Bremsmoment durch die Betriebsbremsanlage 6 aufgebaut. Daher wird bis zum Zeitpunkt t2 das Gesamtbremsmoment nur durch das erste Bremsmoment gebildet.

Der Bremsmoment-Grenzwert B_{G} ist dasjenige Bremsmoment, bei dem die Räder, insbesondere die Vorderräder 2 bei einem Frontantrieb oder Allradantrieb, gerade eben blockieren würden, das heißt ab diesem Zeitpunkt das Antiblockiersystem 7 einsetzen würde beziehungsweise einsetzt.

Im Diagramm gemäß Fig. 2 ist durch den Kennlinienverlauf I der Verlauf des ersten Bremsmoments dargestellt, wie es durch den Elektromotor 4 bei dieser Notbremsung erzeugt wird.

Vom Zeitpunkt t1 bis zu einem Zeitpunkt t2 wird das Gesamtbremsmoment des Längsdynamiksystems 5 bei dieser Notbremsung nur durch das erste Bremsmoment des Elektromotors 4 erzeugt, wie bereits oben dargelegt. Zum Zeitpunkt t2 beginnt dann der Aufbau eines messbaren zweiten Bremsmoments, welches durch die Betriebsbremsanlage 6 aufgebaut wird. Der Kennlinienverlauf II dieses zweiten Bremsmoments ist durch die gestrichelte Kurve beispielhaft gezeigt. Es sei bereits an dieser Stelle erwähnt, dass sowohl der Kennlinienverlauf I als auch der Kennlinienverlauf II Beispiele darstellen. Insbesondere ist es wesentlich, dass zu Beginn der Notbremsung praktisch sofort und unverzüglich ein erstes Bremsmoment nur durch den Elektromotor 4 bereitgestellt wird und im weiteren zeitlichen Verlauf der Notbremsung in einer nachfolgenden Zeitphase, die bei dem Beispiel in Fig. 2 zwischen den Zeitpunkten t2 und t3 liegt, gleichzeitig das erste Bremsmoment und das messbare zweite Bremsmoment erzeugt werden.

Ist die Betriebsbremsanlage 6 ein Zwei-Kolben-Schlupfregelsystem, so ist der Zeitpunkt t2, der seit Beginn der Notbremsung zum Zeitpunkt t0 verstreicht, bei circa 200 ms erreicht. Ist die Betriebsbremsanlage 6 stattdessen ein Sechs-Kolben-Schlupfregelsystem, so ist der Zeitpunkt t2 dann bei etwa 150 ms. erreicht Ist die Betriebsbremsanlage 6 stattdessen ein elektromechanischen Bremskraftverstärker, ist dann der Zeitpunkt t2 bei zirka 30 ms erreicht.

Ab diesem Zeitpunkt t2 beginnt dieser messbare Aufbau des zweiten Bremsmoments. Wie in der Darstellung in Fig. 2 gezeigt ist, steigt dieser beispielhaft an, insbesondere kontinuierlich an, bis er zum Zeitpunkt t3 vorteilhafterweise den Bremsmoment-Grenzwert B_{G} erreicht hat. Bei dem in Fig. 2 gezeigten Beispiel ist vorgesehen, dass ab dem Zeitpunkt t2 das erste Bremsmoment reduziert wird. Dies erfolgt insbesondere kontinuierlich bis zum Zeitpunkt t3. Beim Zeitpunkt t3 ist das erste Bremsmoment 0. Es kann vorgesehen sein, dass die beiden Kennlinienverläufe I und II in dem Zeitintervall zwischen t2 und t3 so gebildet sind, dass die beiden Bremsmomente vorzugsweise einen etwa konstanten Summenwert ergeben. Insbesondere ist dieser Summenwert über das gesamte Zeitintervall zwischen t2 und t3 erzeugt. Insbesondere der Kennlinienverlauf II kann in dem Zeitintervall zwischen t2 und t3 unterschiedlich sein. Er kann insbesondere auch von Umgebungsbedingungen abhängen, die berücksichtigt werden können.

Insbesondere ist vorgesehen, dass die Reduzierung des ersten Bremsmoments in dem Zeitintervall t2 bis t3 abhängig von dem Erhöhen des zweiten Bremsmoments auf Basis des zweiten Kennlinienverlaufs II erfolgt. Insbesondere erfolgt diese Abhängigkeit derart, dass in Summe der beiden Bremsmomente der oben angesprochene Summenwert gebildet ist, insbesondere über das gesamte Zeitintervall zwischen t2 und t3.

In der Darstellung gemäß dem Diagramm in Fig. 2 ist vorgesehen, dass ab dem Zeitpunkt t3 das Gesamtbremsmoment nur noch durch das zweite Bremsmoment gebildet ist. Dies ist auch durch den entsprechenden Kennlinienverlauf II dargestellt. Insbesondere wird das zweite Bremsmoment ab dem Zeitpunkt t3 vorzugsweise ab dem Bremsmoment-Grenzwert B_{G} gehalten bis das Kraftfahrzeug 1 steht. Insbesondere kann auch in diesem Zeitintervall ab t3 das zweite Bremsmoment in einem Werteintervall zwischen dem Bremsmoment-Grenzwert B_{G} und einem diesbezüglich maximal um 5 Prozent niedrigeren Wert gehalten werden.

Der Zeitpunkt t3 ist dann, wenn die Betriebsbremsanlage 6 ein Zwei-Kolben-Schlupfregelsystem ist, nach etwa 600 ms erreicht. Ist die Betriebsbremsanlage 6 ein Sechs-Kolben-Schlupfregelsystem, so ist der Zeitpunkt t3 nach etwa 400 ms erreicht. Ist die Betriebsbremsanlage ein elektromechanischer Bremskraftverstärker, so ist der Zeitpunkt t3 nach etwa 200 ms erreicht.

### Bezugszeichenliste

- 1: Kraftfahrzeug
- 2a: rechts Vorderrad
- 2b: rechtes Hinterrad
- 3: Elektroantrieb
- 4: Elektromotor
- 5: Längsdynamiksystem
- 6: Betriebsbremsanlage
- 7: Schlupfregelsystem
- 8: Fahrdynamikregelsystem
- 9: elektronische Verarbeitungseinheit

- I: Kennlinie
- B: Bremsmoment
- B_{G}: Bremsmoment-Grenzwert
- t: Zeit
- t0: Zeitpunkt
- t1: Zeitpunkt
- t2: Zeitpunkt
- t3: Zeitpunkt

## Patentansprüche

1. Verfahren zum Verzögern eines Kraftfahrzeugs (1) bei einer Notbremsung, wobei die gesamte Notbremsung automatisch durch ein Längsdynamiksystem (5) des Kraftfahrzeugs (1) durchgeführt wird, wobei zum Notbremsen ein Gesamtbremsmoment automatisch durch das Längsdynamiksystem (5) des Kraftfahrzeugs (1) erzeugt wird, und dazu durch einen Elektromotor (4) eines Elektroantriebs (3) des Kraftfahrzeugs (1) in einem Zeitintervall (t0 bis t3), beginnend mit dem automatischen Einleiten der Notbremsung und kleiner der Gesamtzeitdauer der Notbremsung, in welchem das Gesamtbremsmoment noch nicht alleine durch eine Betriebsbremsanlage (6) des Längsdynamiksystems (5) erzeugt werden kann, ein erstes Bremsmoment zumindest als Anteil am Gesamtbremsmoment erzeugt wird **dadurch gekennzeichnet, dass**
ein erstes Zeitintervall (t0 bis t2), in dem nur das erste Bremsmoment erzeugt wird und bis zu einem Bremsmoment-Grenzwert (B_{G}) aufgebaut ist, bei welchem ein Antiblockiersystem (7) des Kraftfahrzeugs (1) aktiviert wird, kleiner ist, als ein zweites Zeitintervall (t2 bis t3), in welchem das erste Bremsmoment und ein messbares zweites Bremsmoment gleichzeitig erzeugt werden.

2. Verfahren nach Anspruch 1,
**dadurch gekennzeichnet, dass**
beim automatischen Beginnen der Notbremsung durch das Längsdynamiksystem (5) in einem weiteren Zeitintervall (t0 bis t2), beginnend mit dem automatischen Einleiten der Notbremsung bis zu einem messbar erzeugten zweiten Bremsmoment der Betriebsbremsanlage (6) nur das erste Bremsmoment des Elektromotors (4) zum Aufbringen des Gesamtbremsmoments erzeugt wird.

3. Verfahren nach Anspruch 1 oder 2,
**dadurch gekennzeichnet, dass**
das erste Bremsmoment automatisch nur bis maximal zu einen Bremsmoment-Grenzwert (B_{G}) erzeugt wird, bei welchem ein Antiblockiersystem (7) des Kraftfahrzeugs (1) aktiviert wird.

4. Verfahren nach Anspruch 3,
**dadurch gekennzeichnet, dass**
der Aufbau des ersten Bremsmoments bis zu einem Bremsmoment-Grenzwert (B_{G}) schneller erfolgt, als ein Zeitintervall (t0 bis t2), beginnend mit dem automatischen Einleiten der Notbremsung bis zu einem messbar erzeugten zweiten Bremsmoment der Betriebsbremsanlage (6), dauert.

5. Verfahren nach einem der vorhergehenden Ansprüche,
**dadurch gekennzeichnet, dass**
in einem Zeitintervall (t2 bis t3) kleiner der Gesamtzeitdauer der Notbremsung, in welchem das erste Bremsmoment und ein messbares zweites Bremsmoment gleichzeitig erzeugt werden, die beiden Bremsmomente so erzeugt werden, dass deren Summenwert im Wesentlichen konstant ist.

6. Verfahren nach einem der vorhergehenden Ansprüche,
**dadurch gekennzeichnet, dass**
in dem Zeitintervall (t2 bis t3) der Notbremsung, in welchem das erste Bremsmoment und ein messbares zweites Bremsmoment gleichzeitig erzeugt werden, das erste Bremsmoment kontinuierlich reduziert wird und das zweite Bremsmoment kontinuierlich erhöht wird.

7. Verfahren nach Anspruch 6,
**dadurch gekennzeichnet, dass**
das Reduzieren des ersten Bremsmoments derart erfolgt, dass das erste Bremsmoment Null beträgt, wenn das zweite Bremsmoment auf einen Bremsmoment-Grenzwert (B_{G}) erhöht ist, bei welchem ein Antiblockiersystem des Kraftfahrzeugs (1) aktiviert wird.

8. Verfahren nach einem der vorhergehenden Ansprüche,
**dadurch gekennzeichnet, dass**
das Kraftfahrzeug (1) autonom mit der Autonomiestufe 5 betrieben wird.

9. Kraftfahrzeug (1), mit mehreren Rädern (2, 3) und mit einem Elektroantrieb (3) zum Erzeugen von elektrischer Antriebsenergie für das Kraftfahrzeug (1), und mit einem Längsdynamiksystem (5), welches zumindest bei einer Notbremsung des Kraftfahrzeugs (1) einen Elektromotor (4) des Elektroantriebs (3) des Kraftfahrzeugs (1) nutzt und eine dazu separate Betriebsbremsanlage (6) aufweist, und mit einer elektronischen Verarbeitungseinheit (9), welche zum Durchführen eines Verfahrens nach einem der vorhergehenden Ansprüche bei einer Notbremsung des Kraftfahrzeugs (1) ausgebildet ist.

## Claims

1. Method for decelerating a motor vehicle (1) during emergency braking, wherein the entire emergency braking is carried out automatically by a longitudinal dynamics system (5) of the motor vehicle (1), wherein in order to perform emergency braking an overall braking torque is generated automatically by the longitudinal dynamics system (5) of the motor vehicle (1), and for this purpose a first braking torque is generated, at least as a proportion of the overall braking torque, by an electric motor (4) of an electric drive (3) of the motor vehicle (1) in a time interval (t0 to t3), beginning with the automatic initiation of the emergency braking and for less than the overall time period of the emergency braking, in which the overall braking torque cannot yet be generated solely by a service brake system (6) of the longitudinal dynamics system (5), **characterized in that**
a first time interval (t0 to t2), in which only the first braking torque is generated and has been built up to a braking torque limit value (B_{G}) at which an anti-lock braking system (7) of the motor vehicle (1) is activated, is for less than a second time interval (t2 to t3), in which the first braking torque and a measurable second braking torque are generated simultaneously.

2. Method according to Claim 1,
**characterized in that**
during the automatic starting of emergency braking by the longitudinal dynamics system (5) in a further time interval (t0 to t2), beginning with the automatic initiation of emergency braking up to a measurably generated second braking torque of the service brake system (6), only the first braking torque of the electric motor (4) is generated to apply the overall braking torque.

3. Method according to Claim 1 or 2,
**characterized in that**
the first braking torque is automatically generated only up to a maximum of a braking torque limit value (B_{G}), at which an anti-lock braking system (7) of the motor vehicle (1) is activated.

4. Method according to Claim 3,
**characterized in that**
the build-up of the first braking torque up to a braking torque limit value (B_{G}) takes place faster than a time interval (t0 to t2), beginning with the automatic initiation of the emergency braking up to a measurably generated second braking torque of the service brake system (6).

5. Method according to one of the preceding claims, **characterized in that**
in a time interval (t2 to t3) for less than the overall time period of the emergency braking, in which the first braking torque and a measurable second braking torque are generated simultaneously, the two braking torques are generated in such a manner that their sum value is substantially constant.

6. Method according to one of the preceding claims, **characterized in that**
in the time interval (t2 to t3) of the emergency braking, in which the first braking torque and a measurable second braking torque are generated simultaneously, the first braking torque is continuously reduced and the second braking torque is continuously increased.

7. Method according to Claim 6,
**characterized in that**
the reduction in the first braking torque takes place in such a manner that the first braking torque is zero when the second braking torque has been increased to a braking torque limit value (B_{G}), at which an anti-lock braking system of the motor vehicle (1) is activated.

8. Method according to one of the preceding claims, **characterized in that**
the motor vehicle (1) is operated autonomously with autonomy level 5.

9. Motor vehicle (1), with a plurality of wheels (2, 3) and with an electric drive (3) for generating electrical drive energy for the motor vehicle (1), and with a longitudinal dynamics system (5), which uses an electric motor (4) of the electric drive (3) of the motor vehicle (1) at least during emergency braking of the motor vehicle (1) and has a separate service brake system (6), and with an electronic processing unit (9), which is designed for carrying out a method according to one of the preceding claims during emergency braking of the motor vehicle (1).

## Revendications

1. Procédé de décélération d'un véhicule automobile (1) lors d'un freinage d'urgence, le freinage d'urgence étant entièrement effectué de manière automatique par un système dynamique longitudinal (5) du véhicule automobile (1), un couple de freinage total étant généré automatiquement par le système dynamique longitudinal (5) du véhicule automobile (1) pour effectuer un freinage d'urgence, et pour cela un premier couple de freinage étant généré au moins en proportion du couple de freinage total par un moteur électrique (4) d'un entraînement électrique (3) du véhicule automobile (1) dans un intervalle de temps (t0 à t3) qui commence à partir du déclenchement automatique du freinage d'urgence, qui est inférieur à la durée totale du freinage d'urgence et dans lequel le couple de freinage total ne peut pas encore être généré uniquement par une installation de freinage de service (6) du système dynamique longitudinal (5),
**caractérisé en ce que**
un premier intervalle de temps (t0 à t2), dans lequel seul le premier couple de freinage est généré et s'élève jusqu'à une limite de couple de freinage (B_{G}), pour laquelle un système antiblocage (7) du véhicule automobile (1) est activé, est inférieur à un deuxième intervalle de temps (t2 à t3), dans lequel le premier couple de freinage et un deuxième couple de freinage mesurable sont générés simultanément.

2. Procédé selon la revendication 1,
**caractérisé en ce que**
lorsque le freinage d'urgence est automatiquement démarré par le système dynamique longitudinal (5) dans un intervalle de temps supplémentaire (t0 à t2), depuis le déclenchement automatique du freinage d'urgence jusqu'à un deuxième couple de freinage généré de manière mesurable de l'installation de freinage de service (6), seul le premier couple de freinage du moteur électrique (4) est généré pour appliquer le couple de freinage total.

3. Procédé selon la revendication 1 ou 2,
**caractérisé en ce que**
le premier couple de freinage est généré automatiquement uniquement jusqu'à un maximum d'une valeur limite de couple de freinage (B_{G}), pour laquelle un système antiblocage (7) du véhicule automobile (1) est activé.

4. Procédé selon la revendication 3,
**caractérisé en ce que**
la durée de l'élévation du premier couple de freinage jusqu'à une valeur limite de couple de freinage (B_{G}) est inférieure à un intervalle de temps (t0 à t2), depuis le déclenchement automatique du freinage d'urgence jusqu'à un deuxième couple de freinage, généré de manière mesurable, de l'installation de freinage de service (6).

5. Procédé selon l'une des revendications précédentes,
**caractérisé en ce que**
dans un intervalle de temps (t2 à t3) inférieur à la durée totale du freinage d'urgence, dans lequel le premier couple de freinage et un deuxième couple de freinage mesurable sont générés simultanément, les deux couples de freinage sont générés de telle sorte que leur valeur totale soit sensiblement constante.

6. Procédé selon l'une des revendications précédentes,
**caractérisé en ce que**
dans l'intervalle de temps (t2 à t3) du freinage d'urgence, dans lequel le premier couple de freinage et un deuxième couple de freinage mesurable sont générés simultanément, le premier couple de freinage est réduit en continu et le deuxième couple de freinage est augmenté en continu.

7. Procédé selon la revendication 6,
**caractérisé en ce que**
le premier couple de freinage est réduit de telle sorte que le premier couple de freinage soit nul lorsque le deuxième couple de freinage est augmenté jusqu'à une valeur limite de couple de freinage (B_{G}), pour laquelle un système antiblocage du véhicule automobile (1) est activé.

8. Procédé selon l'une des revendications précédentes,
**caractérisé en ce que**
le véhicule automobile (1) fonctionne de manière autonome avec un niveau d'autonomie 5.

9. Véhicule automobile (1), comprenant plusieurs roues (2, 3) et un entraînement électrique (3) destiné à générer de l'énergie d'entraînement électrique pour le véhicule automobile (1), et un système dynamique longitudinal (5) qui, au moins lors d'un freinage d'urgence du véhicule automobile (1), utilise un moteur électrique (4) de l'entraînement électrique (3) du véhicule automobile (1) et comporte une installation de freinage de service séparée (6), et une unité de traitement électronique (9) qui est conçue pour mettre en œuvre un procédé selon l'une des revendications précédentes en cas de freinage d'urgence du véhicule automobile (1).
